# EUROPEAN PATENT APPLICATION

(11) **EP 2 110 807 A1**
(43) Date of publication of application: **21.10.2009**
(21) Application number: 08017242.2
(22) Date of filing: 30.09.2008
(51) Int. Cl.: G09G 5/34, G06F 17/30

(54) **Method and apparatus for displaying information and storage medium thereof**

(30) Priority: 18.04.2008 TW 97114573
(71) Applicant: HTC Corporation, Taoyuan County 330 (TW)
(72) Inventor: Kyu, Yone-Myint, Taoyuan City Taoyuan County 330 (TW); Wu, Tsu-Chin, Taoyuan City Taoyuan County 330 (TW); Yang, Chih-Wei, Taoyuan City Taoyuan County 330 (TW)
(74) Representative: Becker Kurig Straus

(57) **Abstract**

A method and an apparatus (300) for displaying information are provided. The information includes a word (500) or a picture (502). The information is displayed with an original proportion. When receiving a first input signal, the information is displayed with a first proportion within a predetermined boundary, according to the first input signal. When receiving a second input signal, the information is arranged according to the second input signal so that the information is displayed with a second proportion within the predetermined boundary. Therefore, the information with adjusted proportion can be still displayed within the predetermined boundary.

## Description

### BACKGROUND OF THE INVENTION

The present invention generally relates to a method for displaying information, and more particularly, to a method for displaying information including a word or a picture.

### SUMMARY OF THE INVENTION

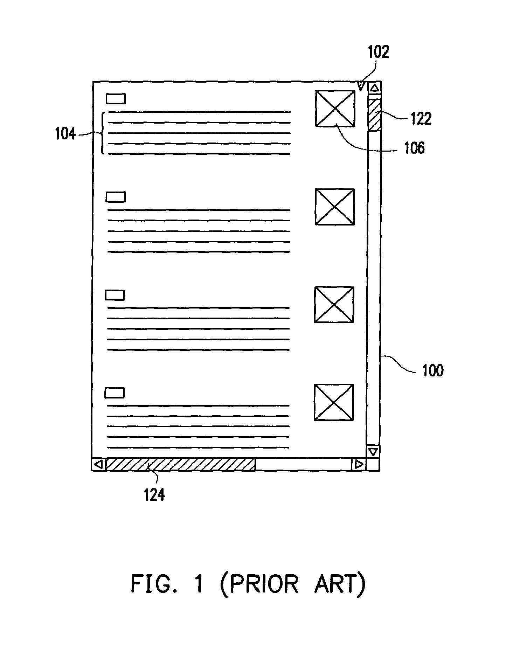

Fig. 1 schematically illustrates viewing an electronic document with a portable electronic apparatus. Referring to Fig. 1, it shows the screenshot of viewing website information 102 with a portable electronic apparatus. The portable electronic apparatus includes a screen providing a displaying region 100 as shown in Fig. 1. Generally, the information 102 may include a word (e.g. 104), and a picture (e.g., 106).

However, when displaying with different proportions, the displaying region 100 may sometimes only be capable of displaying one part of the information 102. In this case, if the user wants to view the other part of the information 102 which is not shown on the current screenshot, he/she has to use the scroll bars 122 and 124 to display the other part of the information 102 on the current screenshot. According to the related art, the user can also touch on the screen and slide to achieve the foregoing object.

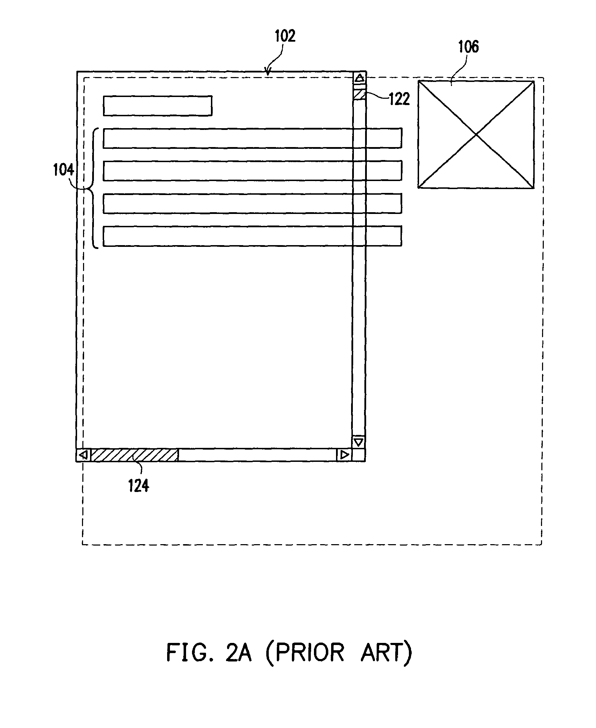

Unfortunately, such a portable electronic apparatus typically cannot be equipped with a large size screen. Therefore, when all the information 102 is displayed in the displaying region 100, the information 102, i.e., either the word 104 or the picture 106, may be displayed with too small a size to be read or recognized. Accordingly, in accordance with the related art, it has been proposed to allow the user to directly operate in the displaying region 100 to partially enlarge the information 102. For example, the user can touch his/her finger on one part of the displayed information 102 which is desired to be enlarged and double click so as to enlarge the double clicked part, as shown in Fig. 2A.

However, although it is convenient for reading after partially enlarging the information 102, the user has to use the scroll bars 122 and 124, or touch his/her finger on a touch screen and slide to view the other part of the information 102, which causes inconvenience for reading.

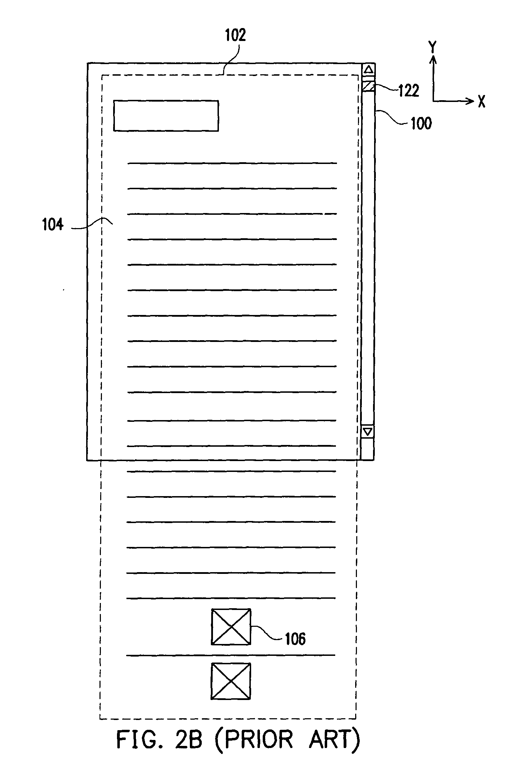

Fig. 2B schematically illustrates displaying information with a reading mode according to a related art. As shown in Fig. 2B, when the information 102 is displayed with a reading mode by the user, the information 102 is rearranged within a predetermined boundary of the displaying region 100. It is concerned to bring more convenience for use, in which the user needs to drive a Y-axis scroll of the displaying region 100 only for viewing the information 102. In other words, the user can read all parts of the information 102 by scrolling up and down the displayed information 102. Of course, the user can also achieve the foregoing object by directly touching his/her finger and sliding on the screen. However, even though the reading mode of the related art is more convenience for use, the conventional reading mode is incapable of adjusting the font size of the word 104 of the information 102. And therefore, when the word 104 is displayed with too small a size, it is still inconvenient for the user to read.

Accordingly, the present invention is directed to provide a method and an apparatus for displaying information, allowing a user to conveniently use, and clearly reading the information displayed on an electronic apparatus.

The present invention is further directed to provide a storage medium, adapted for helping a user to conveniently read electronic information.

The present invention provides a method for displaying information. The information includes a word or a picture, and is displayed with an original proportion. According to the method for displaying the information, when receiving a first input signal, the information is displayed with a first proportion within a predetermined boundary, according to the first input signal. When receiving a second input signal, the information is arranged according to the second input signal so that the information is displayed with a second proportion within the predetermined boundary. Therefore, the information can be displayed within the predetermined boundary and aligned with the predetermined boundary.

According to an embodiment of the present invention, the first proportion is an enlarged proportion relative to the original proportion.

According to an embodiment of the present invention, the second proportion is an enlarged proportion or a reduced proportion relative to the first proportion.

According to an embodiment of the present invention, when the second proportion exceeds a predetermined value, the information is displayed with the first proportion.

According to an embodiment of the present invention, the information is displayed in a column.

According to an embodiment of the present invention, the first input signal is received via a touch screen.

According to an embodiment of the present invention, the second input signal is received via a wheel, a button, or a sensor module. The wheel is defined with a plurality of scales, and when the wheel is turned for one scale, the first proportion is adjusted according to a proportion corresponding to the turned scale.

Viewing from another point, the present invention further provides an electronic apparatus. The electronic apparatus includes a display module, a processing module, and a receiving module. The display module is adapted for displaying information with an original proportion. The information includes a word or a picture. The processing module is coupled to the display module, for controlling displaying of the information. The receiving module is coupled to the processing module for receiving a first input signal and a second input signal, respectively, and transmitting the first input signal and the second input signal to the processing module.

According to an embodiment of the present invention, the first proportion is an enlarged proportion relative to the original proportion.

According to an embodiment of the present invention, the second proportion is an enlarged proportion or a reduced proportion relative to the first proportion.

According to an embodiment of the present invention, when the second proportion exceeds a predetermined value, the information is displayed with the first proportion.

According to an embodiment of the present invention, the information is displayed in a column.

According to an embodiment of the present invention, the first input signal is received by a touch screen.

According to an embodiment of the present invention, the second input signal is received by a wheel, a button, or a sensor module. The wheel is defined with a plurality of scales, and when the wheel is turned for one scale, the first proportion is adjusted according to a proportion corresponding to the turned scale.

Viewing from a further point, the present invention further provides a storage medium including a built-in program code, for processing displaying of information. The information includes at least one of a word and a picture. The program code is adapted for processing displaying of the information, the information is displayed with an original proportion firstly, and when receiving a first input signal, the information is displayed with a first proportion within a predetermined boundary, according to the first input signal; then a second input signal is received, and the information is arranged according to the second input signal so that the information is displayed with a second proportion within the predetermined boundary.

As such, the present invention is more adapted for practical demand of the users, and makes the users operate the electronic apparatus more conveniently.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1 schematically illustrates viewing an electronic file with a portable electronic apparatus.

Fig. 2A schematically illustrates viewing an enlarged electronic file with a portable electronic apparatus.

Fig. 2B schematically illustrates displaying information with a reading mode according to a conventional technology.

Fig. 3 is a schematic view of an electronic apparatus according to an embodiment of the present invention.

Fig. 4 is a block diagram illustrating an inner system of an electronic apparatus according to an embodiment of the present invention.

Figs. 5A through 5D are schematic diagrams illustrating viewing an electronic file according to an embodiment of the present invention.

Fig. 6 is a flow chart illustrating steps of a method for displaying information according to an embodiment of the present invention.

### DESCRIPTION OF THE EMBODIMENTS

Reference will now be made in detail to the present preferred embodiments of the invention, examples of which are illustrated in the accompanying drawings. Wherever possible, the same reference counting numbers are used in the drawings and the description to refer to the same or like parts.

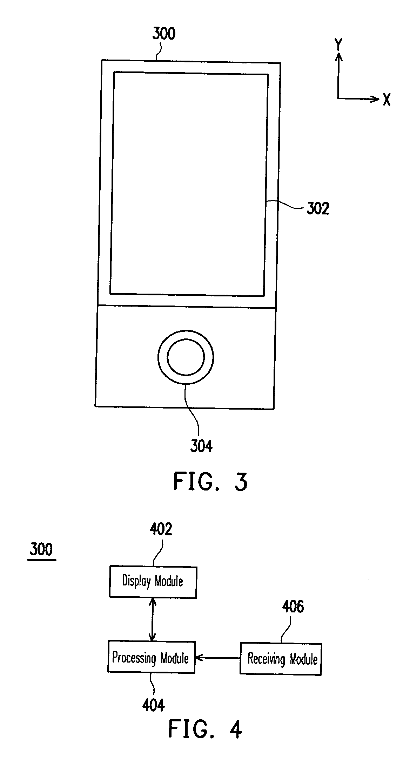

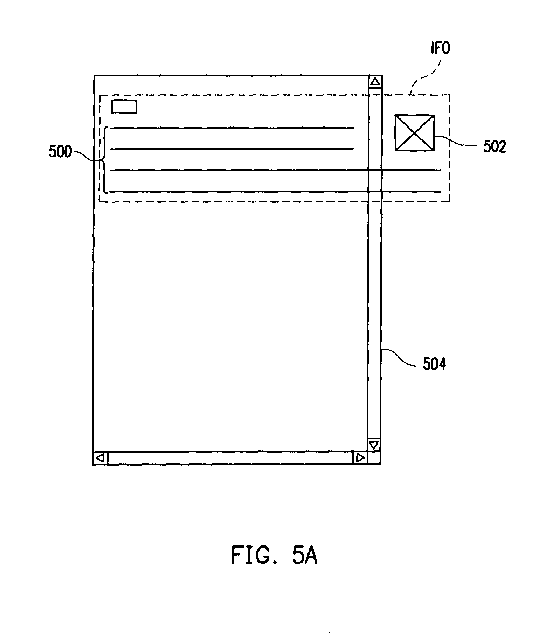

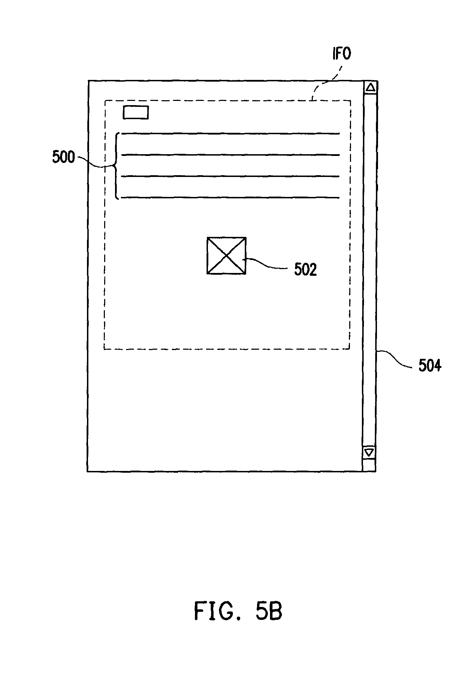

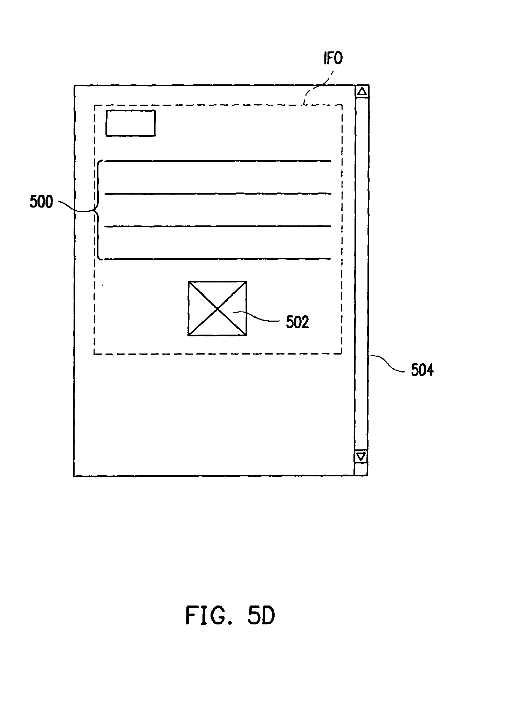

Fig. 3 is a schematic view of an electronic apparatus according to an embodiment of the present invention. Referring to Fig. 3, the electronic apparatus 300 can be, but not restricted to be, a mobile phone, a personal digital assistant (PDA), a pocket computer, a global position system (GPS) navigation device, a cell phone, a PDA phone, a smart phone, or a touch phone. The electronic apparatus 300 includes a display module. The display module for example can be a screen, e.g., a touch screen 302. The touch screen 302 is adapted for receiving an input signal, and adjusting a proportion of the information displayed on the touch screen 302 according to the received input signal, e.g., enlarging for 2 times or displaying with a 250% proportion. Then, the information is displayed within a boundary of the touch screen 302. According to an embodiment of the present invention, the electronic apparatus 300 further includes a wheel 304. The wheel 304 can be defined with a plurality of scales. When the wheel 304 is turned for one scale, the proportion of the information displayed on the touch screen 302 is successively adjusted according to a corresponding proportion. Then, the information is displayed within and aligned with the predetermined boundary of the touch screen 302. The alignment operation is to align a column width of the information IFO with a width of the touch screen 302. For example, as shown in Fig. 5B, a width of a word 500 is substantially equivalent with the width of the touch screen 504, and will not exceed a frame width which can be displayed by the touch screen 504 as shown in Fig. 5A.

In another embodiment of the present invention, the electronic apparatus 300 includes a button. The button can be a real button equipped on the electronic apparatus 300, or a soft key presented on the touch screen 302. The real button and the soft key are adapted for receiving an input signal, so as to allow the electronic apparatus 300 to adjust a proportion of the information displayed on the touch screen 302, and then display the information within the boundary of the touch screen 302.

In another embodiment of the present invention, the electronic apparatus 300 includes a sensor module, disposed for example at a side of the electronic apparatus 300. The sensor module is adapted for sensing a direction of an object (e.g., a finger) moving on a surface thereof, thus receiving an input signal, so as to allow the electronic apparatus 300 to adjust the proportion of the information displayed on the touch screen 302, and then display the information within the boundary of the touch screen 302.

Fig. 4 is a block diagram illustrating an inner system of an electronic apparatus according to an embodiment of the present invention. Referring to Fig. 4, the electronic apparatus 300 includes a display module 402, a processing module 404, and a receiving module 406. The display module 402 is adapted for displaying information. The information includes at least one of a word and a picture. The processing module 404 is coupled to the display module 402, for controlling displaying the information. The receiving module 406 is coupled to the processing module 404. When the receiving module 406 receives an input signal, the receiving module 406 transmits the received input signal to the processing module 404.

Further, when the receiving module 406 receives a first input signal, the receiving module 406 transmits the first input signal to the processing module 404. The processing module 404 then varies the information from being displayed with an original proportion to being displayed with a first proportion within a predetermined boundary, according to the first input signal. Then, when the receiving module 406 receives a second input signal, the receiving module 406 transmits the second input signal to the processing module 404. The processing module 404 then arranges the information so that the information is displayed with a second proportion within the boundary, according to the second input signal.

In an embodiment of the present invention, the first input signal may be generated by a user touching and sliding his/her finger on the touch screen 302. For example, when the user touches and slides his/her finger on the touch screen 302 towards a first direction (e.g., upwardly), the receiving module 406 receives the first input signal corresponding to the first direction. Correspondingly, when the user touches and slides his/her finger on the touch screen 302 towards a second direction (e.g., downwardly), the receiving module 406 receives the first input signal corresponding to the second direction. Therefore, the information can be varied from being displayed with the original proportion to being displayed with the first proportion. For example, the information is displayed with a three times enlargement, or with a 120% proportion, within the boundary of the touch screen 302.

Or otherwise, the user clockwise or counterclockwise slides his/her finger on the touch screen 302, therefore the receiving module 406 correspondingly receives the first input signal corresponding to the clockwise or counterclockwise sliding. Therefore, the processing module 404 determines a displaying mode of displaying the information according to the first input signal. It should be noted that the foregoing embodiments are given for illustrating the spirit of the present invention without restricting the scope of the present invention.

Figs. 5A through 5D are schematic diagrams illustrating viewing an electronic file according to an embodiment of the present invention. Referring to Figs. 5A through 5D together, the information IFO includes at least one of a word 500 and a picture 502. In some embodiments, an original size of the information IFO may be greater than a displaying region of the touch screen 504. In this case, the touch screen 504 can display only a part of the information IFO.

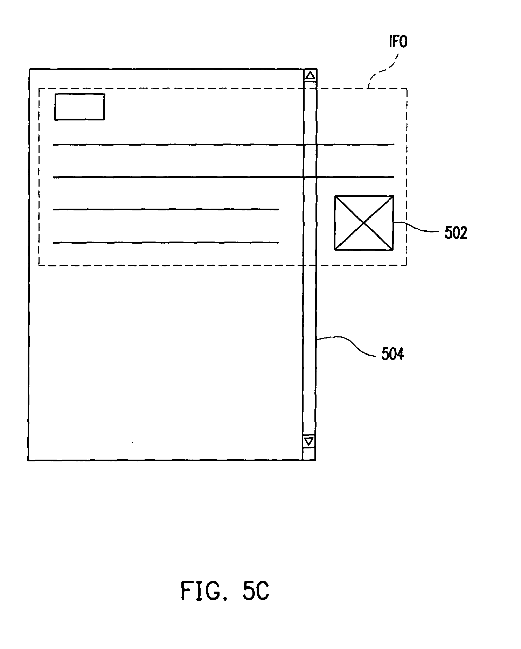

Further, when the information IFO is entirely displayed in the displaying region, the touch screen 504 can be used for receiving an input signal, and adjusting a proportion of the information IFO displayed on the touch screen 504 according to the received input signal, e.g., enlarging for 6 times or displaying with a 150% proportion. Then the information IFO is displayed within a boundary of the touch screen 504.
The input signal received by the touch screen 504, can be a specific track drawn by the user on a surface of the touch screen 504, e.g., an upward slide or a downward slide, or a clockwise slide or a counterclockwise slide. Then, the processing module enlarges the proportion of the information IFO to be displayed on the touch screen 504, and arranges the enlarged information in a single column so as to display the enlarged information IFO within the displaying range of the touch screen 504, as shown in Fig. 5B. In another embodiment of the present invention, after being enlarged or reduced, the information IFO is arranged in a single column, and is aligned with a predetermined boundary of the touch screen 504 for displaying. In this case, the alignment operation is to align a column width of the information IFO with a width of the touch screen 504. For example, as shown in Fig. 5B, a width of a word 500 is substantially equivalent to the width of the touch screen 504, and will not exceed a frame width which can be displayed by the touch screen 504 as shown in Fig. 5A. In other words, even when enlarged, the information IFO is still fitted within the boundary of the touch screen 504. In some embodiments, the column width of the information IFO is substantially equivalent with the width of the touch screen 504. As shown in Fig. 5B, the information IFO is arranged in a single column. In this case, the user is allowed to read the content of the entire information IFO by operating a Y-axis scroll and without operating an X-axis scroll. Then, the receiving module receives another input signal which is for example generated by rolling a wheel. The wheel is defined with a plurality of scales, and when the wheel is turned for one scale, the proportion of the information IFO displayed on the touch screen 504 is successively adjusted according to a proportion corresponding to the turned scale. Therefore, the proportion of the information IFO displayed on the touch screen 504 can be enlarged or reduced by controlling the wheel. As shown in Fig. 5C, in accordance with the present embodiment, the information IFO displayed with the enlarged or reduced proportion can be further arranged in a single column, and entirely displayed within the displaying range of the touch screen 504. In another embodiment of the present invention, the information IFO displayed with the enlarged or reduced proportion is arranged in a single column and aligned with a predetermined boundary of the touch screen 504.

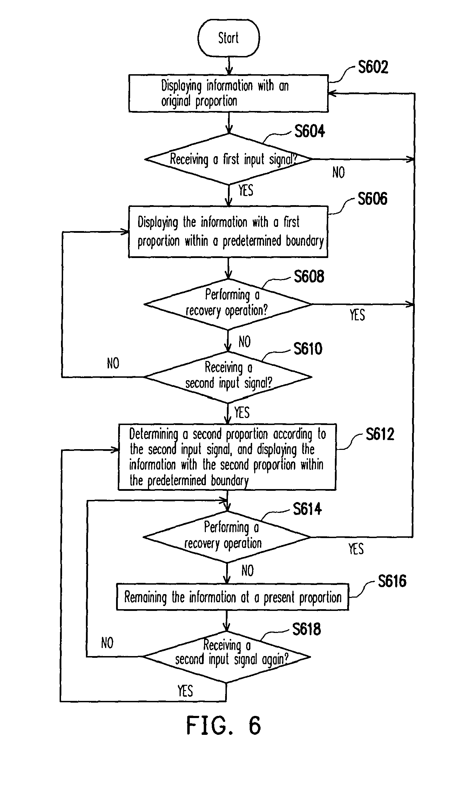

Summarizing the foregoing operations, the present invention further provides a method for displaying information. Fig. 6 is a flow chart illustrating steps of a method for displaying information according to an embodiment of the present invention. Referring to Fig. 6, when it is desired to display information, in step S602, the information is displayed with an original proportion. Meanwhile, in step S604, it is determined whether there is a first input signal received. If it is determined that there is no first signal received thereby (i.e., marked with "NO" as a result of the step S604), the information is remained as being displayed with the original proportion. Or otherwise, if it is determined that there is a first signal received (i.e., marked with "YES" as a result of the step S604), the information is displayed with a first proportion within a predetermined boundary, at step S606. The first proportion is an enlarged proportion relative to the original proportion.

Then, at step S608, it is determined whether the user performs a recovery operation. If the user performs a recovery operation (i.e., marked with "YES" as a result of the step S608), the information is recovered back for being displayed with the original proportion, i.e., return back to step S602. Or otherwise, if the user does not performs the recovery operation, (i.e., marked with "NO" as a result of the step S608), the embodiment then goes to step S610 to determine whether there is a second input signal received thereby.

If there is no second input signal received, (i.e., marked with "NO" as a result of the step S610), the information is remained as being displayed with the first proportion within the predetermined boundary, i.e., return to step S606. Or otherwise, if there is a second input signal received thereby, (i.e., marked with "YES" as a result of the step S610), the embodiment then goes to step S612, in which a second proportion is determined according to the second input signal, and the information is displayed with the second proportion within the predetermined boundary. According to an aspect of the embodiment, the second proportion is an enlarged proportion or a reduced proportion relative to the first proportion.

Further, at step S614, the embodiment again determines whether the user performs the recovery operation. Similarly, if the user performs the recovery operation, then the embodiment returns back to the step S602. Or otherwise, if the user does not perform the recover operation, the embodiment goes to step S616, in which the information is remained at a present proportion. And then, at step S618, it is determined whether there is a further second input signal received again. If there is no further second input signal successively inputted, (i.e., marked with "NO" as a result of the step S618), the embodiment then repeats the step S614 and the following thereof. Or otherwise, if there is a further second input signal received again, (i.e., marked with "YES" as a result of the step S618), the embodiment then repeats the step S612 and the following thereof.

In some other embodiments, the foregoing functions of the electronic apparatus as discussed above can also be configured by a program code. The program code can be stored in a storage medium, such as an optical disk, an audio/video disc, a high density digital versatile disc (HD DVD), a flash memory apparatus, or a memory card. Therefore, the user can install the program code stored in the storage medium into a desktop computer or other mobile apparatuses.

In summary, when receiving a display signal, the present invention varies information from being displayed with an original proportion to being displayed with a first proportion. The information is rearranged and thus displayed within a predetermined boundary. Therefore, the user can easily read the content of the information, and is allowed to conveniently operate. Further, when the information is displayed with the first proportion, the present invention is adapted for switching to display the information with a second proportion according to a second input signal, and rearranging the information, for maintaining the information being displayed within the predetermined boundary. As such, the present invention is capable of satisfying the practical demand of the user as discussed above.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for displaying information, the information comprising a word (500) or a picture (502), and being displayed with an original proportion, the method being **characterized by** the steps of:
receiving a first input signal;
displaying the information in a column with a first proportion within a predetermined boundary according to the first input signal;
receiving a second input signal; and
arranging the information according to the second input signal so that the information being displayed in the column with a second proportion within the predetermined boundary.

2. The method according to claim 1, **characterized in that** the step of displaying the information within the predetermined boundary comprises:
aligning the information with the predetermined boundary for displaying.

3. The method according to claim 1, **characterized in that** the first proportion is an enlarged proportion relative to the original proportion, and the second proportion is an enlarged proportion or a reduced proportion relative to the first proportion.

4. The method according to claim 1, **characterized in that** when the second proportion exceeds a predetermined value, the information is displayed with the first proportion.

5. The method according to claim 1, **characterized in that** the first input signal is received via a touch screen (302, 504), and the second input signal is received via a wheel (304), a button, or a sensor module.

6. The method according to claim 5, **characterized in that** the wheel (304) is defined with a plurality of scales, and when the wheel (304) is turned for one scale, the first proportion is adjusted according to a proportion corresponding to the turned scale.

7. An electronic apparatus (300), **characterized by**:
a display module (402), adapted for displaying information, wherein the information comprises a word (500) or a picture (502);
a processing module (404), coupled to the display module (402) for controlling displaying of the information; and
a receiving module (406), coupled to the processing module (404) for receiving a first input signal and a second input signal, respectively, and transmitting the first input signal and the second input signal to the processing module (404),
wherein the processing module (404) displays the information in a column from an original proportion to a first proportion within a predetermined boundary according to the first input signal, and then arranges the information for displaying the information in the column with a second proportion within the predetermined boundary according to the second input signal.

8. The electronic apparatus (300) according to claim 7, **characterized in that** displaying the information within the predetermined boundary comprises aligning the information with the predetermined boundary for displaying.

9. The electronic apparatus (300) according to claim 7, **characterized in that** the first proportion is an enlarged proportion relative to the original proportion, and the second proportion is an enlarged proportion or a reduced proportion relative to the first proportion.

10. The electronic apparatus (300) according to claim 7, **characterized in that** when the second proportion exceeds a predetermined value, the information is displayed with the first proportion.

11. The electronic apparatus (300) according to claim 7, **characterized in that** the first input signal is received via a touch screen (302, 504), and the second input signal is received via a wheel (304), a button, or a sensor module.

12. The electronic apparatus (300) according to claim 11, **characterized in that** the wheel (304) is defined with a plurality of scales, and when the wheel (304) is turned for one scale, the first proportion is adjusted according to a proportion corresponding to the turned scale.

13. A storage medium, **characterized by** a built-in program code for displaying information, the information comprising a word (500) or a picture (502), the program code being adapted for processing displaying of the information, wherein:
the information is displayed with an original proportion, and when receiving a first input signal, the information is displayed with a first proportion within a predetermined boundary, according to the first input signal; and
a second input signal is received, and the information is arranged according to the second input signal so that the information is displayed with a second proportion within the predetermined boundary.

14. The storage medium according to claim 13, **characterized in that** the information is displayed in a column.

15. The storage medium according to claim 13, **characterized in that** the first proportion is an enlarged proportion relative to the original proportion, and the second proportion is an enlarged proportion or a reduced proportion relative to the first proportion.
